# EUROPEAN PATENT APPLICATION

(11) **EP 4 007 109 A1**
(43) Date of publication of application: **01.06.2022**
(21) Application number: 21211083.7
(22) Date of filing: 29.11.2021
(51) Int. Cl.: H02J 3/32, H02J 7/00, H02J 7/02, B60L 55/00

(54) **CENTRALIZED CHARGING SYSTEM FOR BATTERIES OF ELECTRIC VEHICLES IN PARKING AREAS**

(30) Priority: 27.11.2020 IT 202000028727
(71) Applicant: Free2move Esolutions S.p.A., 20158 Milano (IT)
(72) Inventor: LAMBERTI, Francesco, 20161 MILANO (IT); CRUGNOLA, Giorgio, 21100 VARESE (IT); ROSATI, Daniele, 28069 Trecate (IT); RABONI, Pietro, 20157 MILANO (IT); MERALDI, Lorenzo, 20157 MILANO (IT)
(74) Representative: Lunati & Mazzoni S.r.L.

(57) **Abstract**

It is provided a centralized charging system (1) for batteries (EVB) of electric vehicles (10) in parking areas including a parking area (2) configured to allow the parking of one or more electric vehicles (10) including a or more first electric vehicle batteries (EVB1); one or more groups of loads (3) including at least one or more charging stations (30) distributed on the parking area (2) and each configured to be connected to at least one first battery (EVB₁) of an electric vehicle to supply or receive electric energy respectively to or from the first battery (EVB₁); a central apparatus (4) operatively connected to one or more groups of loads (3) to exchange electric energy with them, configured to be connected to an external power network (11) to receive from it and to transfer to it electric energy drawn from the groups of loads (3) to support the power network (11) in times of high demand for electric energy and comprising a bi-directional conversion apparatus (40) operationally connected between the external power network (11) and the groups of loads (3) and configured to convert AC voltage into DC voltage and vice-versa; a distribution device (5) operatively connected to the conversion apparatus (40) and configured to route the incoming electric energy from the conversion apparatus (40) or from the groups of loads (3) to each of the groups of loads (3) o to the conversion apparatus (40); wherein each of the stations (30) comprises a galvanically isolated converter (300) operatively connected to the distribution device (5) and the first battery (EVB₁) and configured to modulate in voltage the reception or transfer of electric energy of or from the first battery (EVB₁).

## Description

The present invention relates to a centralized charging system for batteries of electric vehicles in parking areas of the type specified in the preamble of the first claim.

In particular, the present invention relates to a centralized charging system for batteries of electric vehicles in parking areas, such as for example car parks, service areas or even more.

Similar systems are described in patent applications US-A-2012/074901, US-A-2019/168630 A1, WO-A-2018/193097 and US-A-2011/276194.

As is known, in recent years, various systems have been developed which tend to centralize the power conversion in order to simplify interfacing with the electrical network and allow fast charging of electric vehicles, also known by the acronym EV. These systems are substantially equipped with a central energy collection core configured to route said energy to a plurality of terminals, generally charging columns for electric vehicles.

Furthermore, the central core is operationally connected to an external electrical network, for example infrastructural, so as to receive from it the energy necessary for the operation of the columns.

The known technique described includes some important drawbacks.

In particular, centralized systems tend to place a considerable burden on the electricity grid to which they are connected.

This problem is, of course, all the more relevant the greater the number of terminals available and, therefore, the size of the fleet of electric vehicles that can be charged at the same time.

In addition, such systems are significantly affected by the fluctuations that can occur during the transmission of energy by the external electricity network.

In fact, if the latter is subjected to excessive loads and is unable to meet the energy demand from the centralized system, the system may not be able to function efficiently for the entire fleet.

In conclusion, in all the systems of the prior art, as described for example in the patent applications US-A-2012/074901, US-A-2019/168630 A1, WO-A-2018/193097 and US-A-2011/276194, have the important drawback of not being suitable for large-scale operation, i.e. with a large number of users or electric vehicles.

In fact, each of the systems of the known art can function correctly and safely only as long as a certain number of users in parallel limited by the equivalent resistance of each user in relation to the total power deliverable by the systems is not exceeded.

In this situation, the technical task underlying the present invention is to devise a centralized charging system for batteries of electric vehicles in parking areas capable of substantially obviating at least part of the aforementioned drawbacks.

Within the scope of said technical task, an important object of the invention is to obtain a centralized charging system for batteries of electric vehicles in parking areas which considerably reduces the energy burden on the external electrical network, thus avoiding inducing power drops on the same. due to operating peaks of the system itself.

Another important object of the invention is to provide a centralized charging system for batteries of electric vehicles in parking areas that is not affected by fluctuations in the supply of electricity that can be generated in external electricity networks such as, for example, urban infrastructure networks, suburban or similar.

In conclusion, a further aim of the invention is to provide a centralized charging system for batteries of electric vehicles in parking areas which can be used efficiently and safely by an unlimited number of users.

The technical task and the specified aims are achieved by a centralized charging system for batteries of electric vehicles in parking areas as claimed in the attached claim 1.

Preferred technical solutions are highlighted in the dependent claims.

The characteristics and advantages of the invention are clarified below by the detailed description of preferred embodiments of the invention, with reference to the accompanying drawings, in which:

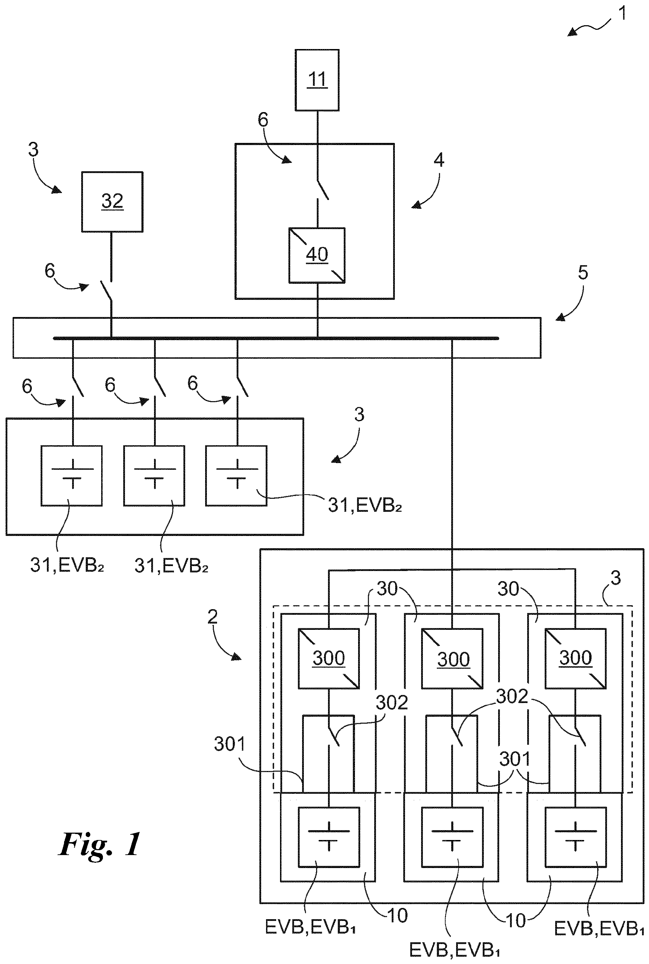

the **Fig. 1** shows a functional diagram of a centralized charging system for batteries of electric vehicles in parking areas according to the invention;

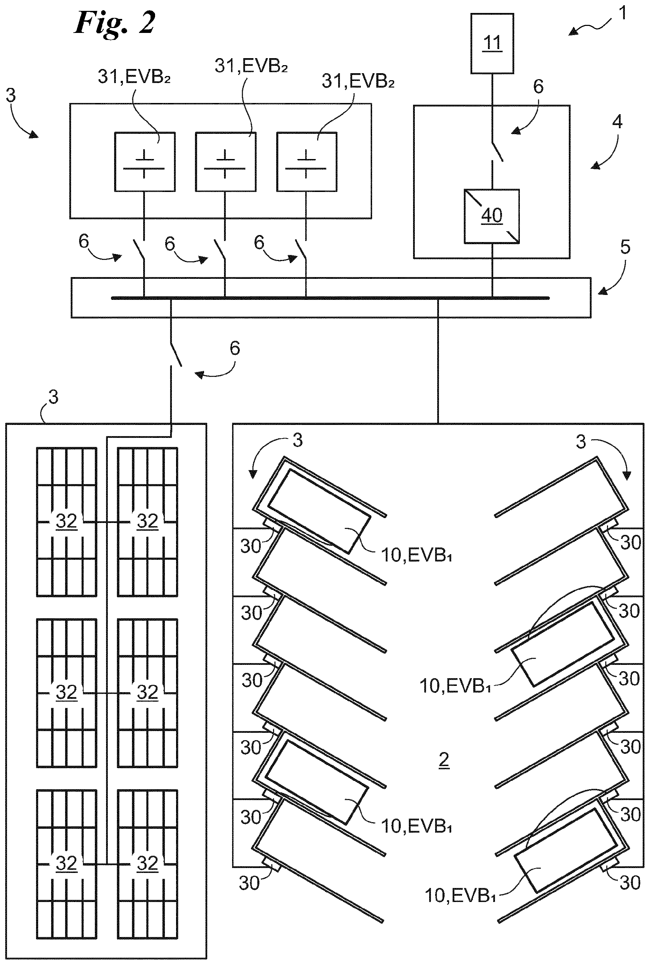

the **Fig. 2** illustrates a schematic example of implementation of a centralized charging system for batteries of electric vehicles in parking areas according to the invention;
the **Fig. 3** is a further practical example of implementation of a centralized charging system for batteries of electric vehicles in parking areas; and
the **Fig. 4** shows an example of control of a parking system comprising a centralized charging system for batteries of electric vehicles in parking areas according to the invention in which are shown in detail the conversion stages defining the galvanic isolation.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as carried out in the ICAO International Standard Atmosphere (ISO 2533: 1975).

With reference to the Figures, the centralized charging system for batteries of electric vehicles in parking areas according to the invention is globally indicated with the number **1.**

The system 1 is adapted to allow the charging of electric energy for the operation of an electric vehicle **10.**

The electric vehicle 10 can be of any type. Of course, the electric vehicle 10 is also a hybrid vehicle including various possible power supplies, including fuel. Essentially, the electric vehicle 10 comprises at least one battery **EVB** of electric vehicle.

EVB batteries are substantially particular electric batteries, also known by the term traction batteries, which differ from starter, lighting and ignition batteries because they are designed to supply energy for prolonged periods of time. Of course, EVB batteries are now extremely well known in the current state of the art.

In particular, preferably, the electric vehicle 10 comprises a first battery **EVB₁** of electric vehicle.

The first battery EVB₁ is basically an EVB battery. Therefore, it is a traction battery. System 1 comprises at least a parking area **2.**

The parking area 2 can be any area, of any size. Essentially, the parking area 2 is at least configured to allow the parking of said one or more electric vehicles 10 comprising one or more first batteries EVB ₁.

The parking area 2, therefore, can be determined by the driveway surface of a parking lot within which the electric vehicles 10 can stop for recharging the first battery EVB₁.

Naturally, the parking area 2 can be urban or extra-urban, and can be located, for example, within service areas, for example motorways.

The system 1 also includes one or more groups of users **3.**

The users 3 are essentially elements of the system 1 through which electrical energy can be exchanged. In this sense, the users 3 can be users of electrical energy, or they can also be dispensers of said electrical energy.

Preferably, the groups of users 3 comprise at least one or more charging terminals **30.**

The one or more terminals 30, preferably, are distributed over the parking area 2. Each terminal 30, moreover, is configured to charge the first battery EVB₁ when connected to it, preferably after connection to the electric vehicle 10.

Naturally, this is the latter can comprise unions arranged on the body or hull and adapted to allow the connection of the terminal 30 indirectly with the first battery EVB₁.

Therefore, the terminal 30 is configured to be connected to the first battery EVB₁. In particular, the terminal 30 is configured to deliver or receive electrical energy respectively towards or from the first battery EVB₁.

The system 1 therefore also includes a central apparatus **4.**

The central apparatus 4 is preferably configured to be connected to an external electrical network **11.**

The external electrical network 11 can be a domestic network or an industrial network. In any case, the external electrical network 11 is preferably adapted to supply, upon request, electrical energy in the form of alternating current AC.

The central apparatus 4 is therefore configured to at least withdraw or receive electrical energy from the external electrical network 11. Furthermore, the central apparatus 4 is operatively connected to one or more groups of users 3 to exchange electrical energy with them.

Therefore, the electrical energy drawn from the central apparatus 4 can therefore be made available to the users 3 and, for example, to the first battery EVB₁ through a terminal 30 to charge it.

Advantageously, the central apparatus 4 performs a further important function.

In fact, the central apparatus 4 is further configured to transfer electricity drawn from one or more groups of users 3 to the external electrical network 11.

In particular, the central apparatus 4 is configured to transfer energy to the external electrical network when the electrical network external 11 is subject to drops in the electrical power supplied.

In other words, the central apparatus 4 has the function of bilaterally supplying system 1 and external electrical network 11 when it is necessary to do so in such a way as to avoid that on one side or the other there may be imbalances of electrical energy.

Naturally, the operation of the central apparatus 4 can be coordinated and controlled by local computerized control systems or even remotely. These functions can be simply implemented by means of processors and control devices and sensors known to the state of the art and which are not a particular object of the present application.

From a structural point of view, the central apparatus 4 comprises a conversion apparatus **40.** The conversion apparatus 40 is operatively connected between the external electrical network 11 and one or more groups of users 3.

The conversion apparatus 40 is also configured to convert an alternating current signal into direct current and vice versa.

Therefore, the conversion apparatus 40 is bidirectional. In this regard, it can include one or more rectifiers and inverters. As is known, a rectifier 21 is substantially configured to convert the alternating current signal into direct current, or rather. it is an AC/DC converter, while the inverter is substantially configured to convert the direct current signal into alternating current, i.e. it is a converter DC/AC.

The groups of users 3 can also include several elements.

Advantageously, a group of users 3 can include at least one accumulation apparatus **31.**

The accumulation apparatus 31 is substantially an energy accumulation element, that is, suitable for storing electrical energy in such a way as to be able to store and use it when necessary or required.

The accumulation apparatus 31 is, therefore, preferably available in connection with the central apparatus 4. The accumulation apparatus 31 can, therefore, define at least one configuration in which it is connected to the central apparatus 4 and at least one configuration in which it is not connected to it. Furthermore, the accumulation apparatus 31 is preferably available in connection also, or alternatively, with the first battery EVB₁. Therefore, the accumulation apparatus 31 can also define at least one configuration in which it is connected to the first battery EVB₁ and at least one configuration in which it is not connected to it.

In general, the accumulation apparatus 31 is suitable for receiving or delivering electrical energy from or to the central apparatus 4 or also from or to the first battery EVB₁ itself.

Advantageously, the accumulation apparatus 31 may not comprise a simple conventional battery.

The accumulation apparatus 20, in fact, can comprise at least a second battery **EVB₂** of electric vehicle.

The second battery EVB₂ is essentially an EVB battery as well. Therefore, in other words, it is a traction battery.

The second battery EVB₂, therefore, allows you to charge the first EVB1 battery, for example in fast mode or even ultra-fast charge.

Naturally, the accumulation apparatus 31 and, therefore, the second battery EVB ₂ are configured to accumulate energy, over time, above all from the external electrical network 11 via the central apparatus 4.

Furthermore, preferably but not necessarily, the second battery EVB₂ is of the same type as the first battery EVB₁.

The advantage of including a second battery EVB₂ substantially identical to the first battery EVB₁ is that of increasing the charging efficiency of the system 1. Furthermore, it is possible to supply the accumulation apparatus 31 with a second battery EVB₂ which can be substantially as a first battery EVB₁ used or second hand. Preferably, the accumulation apparatus 31 furthermore comprises a plurality of second batteries EVB₂.

The accumulation apparatus 31 can also be part of each terminal 30, or the accumulation apparatus 31 can be included within the central apparatus 4.

In this sense, the central apparatus 4 can include a container **41.** The container 41 can be a container that can be easily transported to any rest area 2 inside which at least the conversion apparatus 40 and the accumulation apparatus 31 are preferably positioned. Furthermore, in turn, the accumulation apparatus 31 can include a plurality of second batteries EVB₂ organized in racks inside the container 41 so as to be easily transportable.

In other words, the central apparatus 4 which includes the accumulation apparatus 31 can define an electric vehicle 10 recharging system capable of also performing a back-up function with respect to the external electrical network 11 to which it is connected.

The groups of users 3 can also include further elements.

For example, one or more groups of users 3 comprise at least one external acquisition device **32.**

The acquisition device 32 is configured to acquire electrical energy from an external environment. For example, the acquisition device 32 can choose one or more among photovoltaic panels, solar panels, wind power plants or similar, ie plants whose energy sources are of the renewable type.

Furthermore, preferably, the acquisition device 32 is available in connection with the central apparatus 4 and/or the first battery EVB₁.

In particular, preferably, the acquisition device 32 is configured at least to deliver electrical energy to the central apparatus 4 and/or the first battery EVB₁.

The system 1 can therefore comprise a distribution device **5.**

The distribution device 5 is preferably operatively connected to the conversion apparatus 40. Furthermore, the distribution device 5 is configured to sort electrical energy entering the conversion apparatus 40 or from one or more groups of users 3 to one or more groups of users 3 or to the conversion apparatus 4.

Therefore, the distribution device 5 can be, for example, a DC-Bus configured to sort the direct current signal between the conversion apparatus 40 and the various output or input users 3.

Each of the terminals 30 may furthermore include some components.

Preferably, each terminal 30 can include a converter **300.**

The converter 300 is preferably operatively connected between the distribution device 5 and the first battery EVB₁. The converter 300 is, therefore, preferably adapted to modulate in voltage the reception or the transfer of electrical energy from or from the first battery EVB₁.

The converter 300 is advantageously a galvanically isolated converter.

Therefore, the galvanically isolated DC/DC converter can comprise, or consist of, a stage for converting electrical quantities such as direct voltage and direct current to adapt the levels of the same to the two devices operatively connected to the converter 300, respectively at the input and output, i.e. the distribution device 5 and a first battery EVB₁.

The term "galvanically isolated" means that the conversion stage comprises a transformer defined by two windings, each of which is arranged on a respective said electrical circuit. Therefore, the two electrical circuits, input and output of the DC/DC, are respectively connected to, or part of, the distribution device 5 and the first battery EVB₁ and are isolated from each other. This transformer allows the power transmission and the adaptation of the levels of the direct voltage and direct current quantities without; however, the circuits being electrically connected, thus defining an electromagnetic transmission.

Furthermore, the transformer preferably has a high frequency transmission of the electrical quantities, so as to reduce the dimensions of the transformer as much as possible and optimize the overall dimensions. This technology has significant advantages both from the point of view of electrical safety in the event of breakdowns and for the protection of the users of the charging system. Furthermore, it allows the connection of multiple electric vehicles 10 in parallel, on the same distribution device 5, without these compromising the operation of the others. This could occur in the event that, with the parallel setting of multiple electric vehicles 10 without galvanic isolation, the insulation resistance that guarantees safety for each electric vehicle 10 were to be reduced, when in parallel with another electric vehicle 10, compromising the correct functioning of the system 1. Basically, the galvanic isolation allows that, for two electric vehicles 10 in parallel, this resistance value is not altered.

Furthermore, each terminal 30 can comprise connector **301.**

The connector 301 is preferably configured to connect the distribution device 5 to the first battery EVB₁.

The connector 301 can therefore be presented as a simple cable, possibly equipped with a plug to be inserted into the charging socket of the electric vehicle 10. Or, the connector 301 can include a column operatively connected to the distribution device 5 from which a plug emerges.

Each terminal 30, therefore, can also comprise control means **302.**

If present, the control means 302 are configured to allow to control the delivery of electrical energy from the converter 300 to the first battery EVB₁.

The control means 302 can therefore include a switch that can be controlled manually by a user or by an automatic control system.

The control means 302 can therefore be arranged on the connector 301, possibly on the plug or also on the column in such a way as to allow to control the recharging of the first battery EVB₁, or of the electric vehicle 10.

Naturally, the system 1 can include even more elements.

For example, the system 1 may include selection means **6**.

If present, the selection means 6 are configured to selectively connect or disconnect the external electrical network 11 from the conversion apparatus 40 and/or the accumulation apparatus 31 or the acquisition device 32 from the distribution device 5 during the charging the first battery EVB₁.

In particular, the selection means 6 can allow to control the operating modes of the system 1 even during the recharging of the first battery EVB₁.

Therefore, for example, by means of the selection means 6 it is possible to force the system 1 to discharge only the second battery EVB₂ in the first battery EVB₁, or it is also possible to disconnect the second battery EVB₂ and allow only the external electrical network 11, or also to the acquisition device 32, to charge the first battery EVB₁. The acquisition device 32 can also charge the second battery EVB₂, or the first battery EVB₁ or even forward electrical energy to the external electrical network 11. Naturally, the charging of the first battery EVB₁ can also be carried out simultaneously from an external electrical network 11. , acquisition device 32 and second battery EVB₂.

The selection means 6 can therefore include for example switches arranged along the connection between the distribution device 5 and the groups of users 3 and/or also between the external electrical network 11 and the central apparatus 4.

The selection means 6 can moreover, they can be controlled from the outside by a user or can also be managed by an automatic control system.

Therefore, the system 1 can make it possible to create a parking area for electric vehicles which comprises at least the system 1 and at least part of the external electrical network 11.

Advantageously, the parking area can also include a plurality of groups of users 3 distributed and coordinated through a system of control configured to balance the power acquisition and supply of electrical energy of the users 3.

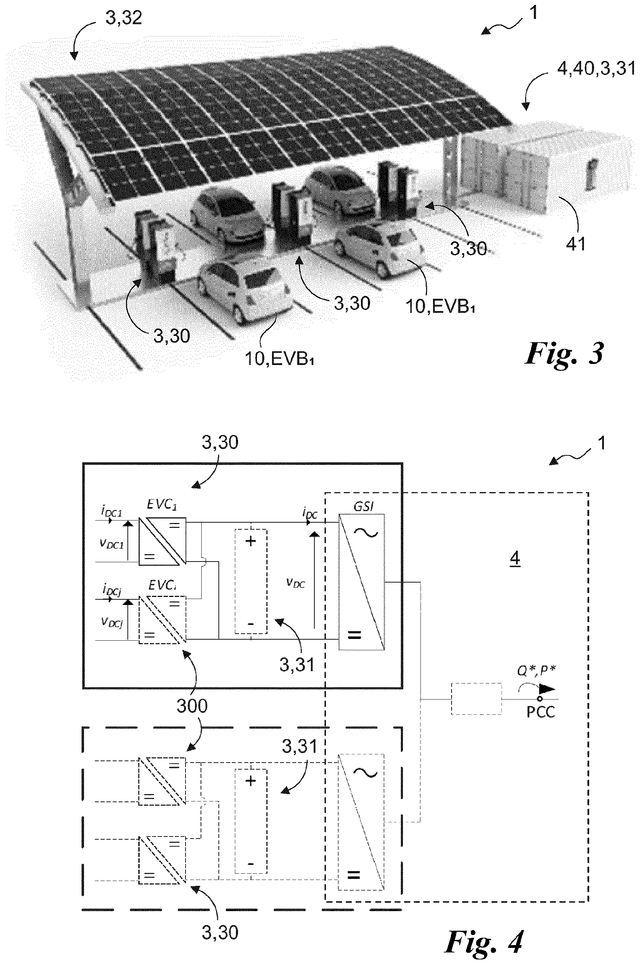

Operationally, therefore, the systems 1 can for example be organized as a plurality of blocks managed by a centralized control system PC, as shown in Fig. 4.

In an example of embodiment without storage devices 31, the control architecture of the systems 1 can provide:
- Central apparatus 4 comprising a conversion apparatus 40 in control of reactive power Q and voltage of the DC-bus Vdc, thus causing each converter 300 as balance node or slack node of the microgrid in DC distributed by the distribution device 5, in which, in order to support the external electrical network 11, the voltage control of the DC-bus can be combined with methods deriving from direct droop control or from the application of Virtual Synchronous Machine (VSM) techniques to the central apparatus 4;
- Terminals 30 controlled in active power P;
- Central PC, in central apparatus 4 or remote, operatively connected to central apparatus 4, regulating the power at the connection point of the Ppcc system, given the requests of the external electricity network 11 and users 3, dispatching power at least to the individual terminals 30 with possible regulation also of the reactive power at the delivery point Qpcc;
- An external optimizer can be added in order to prepare the optimal charge/discharge plan, both in relation to the needs of the electric vehicles 10 and to the compensation plans of the external electrical network 11, and to communicate it periodically to the PC.

Or, in an example in which the systems 1 include accumulation apparatuses 31, the control architecture of the systems 1 can provide:
- Central apparatus 4 including conversion apparatus 40 in active and reactive power control with the addition of a technique inverse droop control which allows to support voltage and/or frequency of the external electrical network 11, or with direct droop control technique or even with Virtual Synchronous Machine (VSM) control technique;
- Accumulation apparatuses 31 acting as balance or slack nodes of the continuous microgrids distributed through the distribution device 5;
- All terminals 30 in active power control P;
- Central PC, in central apparatus 4 or remote, operatively connected to the central apparatus 4, operating in closed loop and given the needs of the external electrical network 11 and of the systems 1 with continuous dispatch in active power P to the individual terminals 30;
- An external optimizer can be added in order to prepare the optimal charge/discharge plan, both in relation to the needs of the electric vehicles 10 and to the compensation plans of the external electrical network 11, and to communicate it periodically to the PC.

The operation of the centralized charging system 1 for batteries of electric vehicles in parking areas previously described in structural terms is as follows.

Basically, the system 1 allows you to manage, both in and out, the supply of electricity arriving from the external electricity grid 11. In particular, the system 1 is able, thanks to its bidirectional architecture, to charge electric vehicles 10 and, at the same time, supplying electrical energy to the external electrical network 11 on which recharging can depend.

In addition, the additional users 3, such as the accumulation apparatus 31 and the acquisition devices 32, which can be connected to the central apparatus 4 of the system 1, allow to stabilize both the system 1 and the external electricity network 11 more, allowing the availability of sources more power and storage options for use as needed.

The centralized charging system 1 for batteries of electric vehicles in parking areas according to the invention achieves important advantages.

In fact, the system 1 considerably reduces the energy burden on the external electrical network, thus avoiding inducing power drops on the same due to operating peaks of the system 1 itself.

Furthermore, another advantage of system 1 is that the latter is not affected, at the same time, by fluctuations in the supply of electricity that can be generated in external electricity networks 11 such as, for example, urban, extra-urban or infrastructure networks or similar.

In particular, the fact of including galvanically insulated converters 300 for each terminal 30 allows electric vehicles 10 to be connected in parallel, on the same distribution device 5, without numerical limitations and without these compromising the operation of the others.

Therefore, the presence of the converters 300 ensures that the system 1 always remains safe and efficient for any number of users connected to the external electrical network 11 regardless of the behaviour and fluctuations of the latter.

In addition, the possibility of centralizing the central apparatus 4 and the accumulation apparatus 31 in a container 41 can make it possible to easily create parking spaces for electric vehicles in areas which are not in themselves suitable for such use.

The invention is susceptible of variants falling within the scope of the inventive concept defined by the claims. In this context, all the details can be replaced by equivalent elements and the materials, shapes and dimensions can be any.

## Claims

1. Centralized charging system (1) for batteries (EVB) of electric vehicles (10) in parking areas comprising:
- a parking area (2) configured to allow the parking of said one or more electric vehicles (10) comprising one or more first batteries (EVB₁) of an electric vehicle,
- one or more groups of users (3) including at least one or more charging terminals (30) distributed on said parking area (2) and each configured to be connected to at least one first battery (EVB₁) of an electric vehicle for delivering or receiving electrical energy respectively towards or from said first battery (EVB₁),
- a central apparatus (4) operatively connected to said one or more groups of users (3) to exchange electrical energy with said one or more users (3), configured to be connected to an external electrical network (11) to receive electrical energy from said external electrical network (11) and to transfer to said external electrical network (11) electrical energy taken from one or more of said groups of users (3) when said external electrical network (11) is subject to drops in the electrical power supplied and comprising a bidirectional conversion apparatus (40) operatively connected between said external electrical network (11) and said one or more groups of users (3) and configured to convert an alternating current signal into direct current and vice versa,
- a distribution device (5) operatively connected to said conversion apparatus (40) and configured to route electrical energy in input from said conversion apparatus (40) or from said one or more groups of users (3) to each of said one or more groups of users (3) or to said conversion apparatus (4) respectively.
and **characterized by**
each of said terminals (30) comprises a galvanically isolated converter (300) operatively connected to said distribution device (5) and said first battery (EVB1) and configured to modulate in voltage the reception or supply of electrical energy of or from said first battery (EVB1).

2. System (1) according to claim 1, wherein said converter (300) comprises a conversion stage including a transformer defined by two windings, each of which arranged on an electrical circuit and in which said circuits are operatively connected to, or part di, respectively said distribution device (5) and said first battery (EVB₁) and isolated from each other.

3. System (1) according to claim 2, wherein said transformer has a high frequency of transmission of the electrical quantities.

4. System (1) according to any one of the preceding claims, wherein said one or more groups of users (3) comprise at least one accumulation apparatus (31) available in connection with said central apparatus (4) and/or said first battery (EVB₁) at least to receive or deliver electrical energy from or to said central apparatus (4) or said first battery (EVB₁).

5. System (1) according to claim 4, wherein said accumulation apparatus (31) comprises a plurality of second electric vehicle batteries (EVB₂).

6. System (1) according to any one of the preceding claims, wherein said one or more groups of users (3) comprise at least one external acquisition device (32) configured to acquire electrical energy from an external environment and available in connection with said central apparatus (4) and/or said first battery (EVB₁) at least to deliver electrical energy to said central apparatus (4) and/or said first battery (EVB₁).

7. System (1) according to claim 6, wherein said acquisition device (32) comprises one or more optionally among photovoltaic panels, solar panels, wind power plants or similar.

8. System (1) according to any one of the preceding claims, wherein each of said terminals (30) comprises a connector (301) configured to connect said converter (300) and said first battery (EVB₁) of said electric vehicle (10) and control means (302) configured to allow to control the supply of electric energy from said converter (300) to said first battery (EVB1).

9. System (1) according to at least claim 6, comprising selection means (6) configured to allow to selectively connect or disconnect said external electrical network (11) from said conversion apparatus (40) and/or said accumulation apparatus (31) or said acquisition device (32) from said distribution device (5) during the charging of said first battery (EVB₁).

10. Parking for electric vehicles comprising at least part of said external electrical network (11) and at least one system (1) according to any one of the preceding claims, in which a plurality of groups of users (3) coordinated by means of a control system configured for balance the power of acquisition and supply of electricity of these users (3).

11. Method for controlling a centralized charging system (1) for batteries (EVB) of electric vehicles (10) in parking areas according to at least claim 4, comprising
- controlling said conversion apparatus (40) into active and reactive power;
and **characterized by** comprising
- voltage control of said distribution device (5) with methods deriving from direct or inverse droop control by making each of said converters (300) and/or said accumulation apparatuses (31) act as balance or slack nodes.

12. Method for controlling a centralized charging system (1) for batteries (EVB) of electric vehicles (10) in parking areas according to at least claim 4, comprising
- controlling said conversion apparatus (40) into active and reactive power;
and **characterized by** comprising
- voltage control of said distribution device (5) with methods deriving from control of the Virtual Synchronous Machine (VSM) type by making each of said converters (300) and/or said accumulation devices (31) act as balance or slack nodes.
